# EUROPÄISCHE PATENTANMELDUNG

(11) **EP 4 450 578 A1**
(43) Veröffentlichungstag der Anmeldung: **23.10.2024**
(21) Anmeldenummer: 24171088.8
(22) Anmeldetag: 18.04.2024
(51) Int. Cl.: C09J 7/24, C09J 7/38, C09J 153/02

(54) **SELBSTKLEBEBAND MIT MOPP-TRÄGER**

(30) Priorität: 19.04.2023 DE 102023109899
(71) Anmelder: TESA SE, 22848 Norderstedt (DE)
(72) Erfinder: DOLLASE, Thilo, 22848 Norderstedt (DE); HAITEL, Johan, 22848 Norderstedt (DE); AUGENSTEIN, Jan, 22848 Norderstedt (DE); KEREP, Patrick, 22848 Norderstedt (DE); ULLOA VILLANUEVA, Elia Raquel, 22848 Norderstedt (DE)
(74) Vertreter: tesa SE

(57) **Zusammenfassung**

Die vorliegende Erfindung betrifft ein Selbstklebeband umfassend einen Träger aus einer monoaxial gereckten Polypropylen-Folie und eine auf den Träger abgestimmte Haftklebemasse, ein Verfahren zur Herstellung des Selbstklebebands sowie dessen Verwendung.

Die Haftklebemasse umfasst:
a) 38 bis 65 Gew.-% einer Elastomerkomponente;
b) 8 bis 45 Gew.-% einer Klebharzkomponente; und
c) 2 bis 22 Gew.-% einer Verstärkungskomponente
jeweils bezogen auf das Gesamtgewicht der Haftklebemasse, **dadurch gekennzeichnet** , dass die Summe der Anteile an Elastomerkomponente und Verstärkungskomponenten in der Haftklebemasse mindestens 52 Gew.-% beträgt, bezogen auf das Gesamtgewicht der Haftklebemasse, und wobei die Verstärkungskomponente wenigstens ein Harz ist, welches ein gewichtsmittleres Molekulargewicht M_{w} von mindestens 800 g/mol aufweist.

## Beschreibung

Die vorliegende Erfindung betrifft ein Selbstklebeband umfassend einen Träger aus einer monoaxial gereckten Polypropylen-Folie (MOPP) und eine auf den Träger abgestimmte Haftklebemasse, ein Verfahren zur Herstellung des Selbstklebebands sowie dessen Verwendung.

Selbstklebebänder werden unter anderem in der Transportsicherung von beweglichen Teilen, zum Beispiel in Kühlschränken, und zum Bündeln von Gegenständen wie beispielsweise Rohre, Profile oder gestapelte Kartons verwendet. Diesen Anwendungen ist gemein, dass bewegliche Teile während des Transports durch das Klebeband sicher fixiert werden, sich das Klebeband nach dem Transport aber rückstandsfrei wieder entfernen lassen muss. Neben einer ausreichenden Klebkraft stellt insbesondere die rückstandsfreie Ablösbarkeit von verschiedenen Untergründen weiterhin eine Herausforderung dar. Gängige Untergründe, von denen sich das Klebeband rückstandslos und beschädigungsfrei auch nach längerer Lagerung bei unterschiedlichen Temperaturen wieder ablösen lassen muss, sind dabei neben Kunststoffen wie PS, PP und PE, verschiedene Metalle sowie lösungsmittel- und wasserbasierte, lösungsmittelfreie oder als Pulver aufgetragene Lacke. Ein gängiger Produktaufbau solcher Selbstklebebänder enthält in der Regel einen Träger und eine Haftklebemasse, wobei als Träger aus wirtschaftlichen Gründen häufig monoaxial gereckte Polypropylen-Folie (MOPP) verwendet wird. Diese weist allerdings den Nachteil einer geringen inneren Festigkeit auf, was beim Ablösen des Klebebands zu einem Spalten der Folie in z-Richtung führen kann, wodurch wiederum unerwünschte Rückstände auf dem Verklebungsgrund verbleiben. Im Stand der Technik wurde eine Reihe von Versuchen unternommen, diesen Nachteilen zu begegnen und das Trägermaterial zu optimieren.

WO 2014/029664 offenbart ein Klebeband mit einem Träger aus einer Folie, auf die zumindest einseitig eine Klebemasse aufgebracht ist, wobei die Folie eine monoaxial gereckte Folie aus Polypropylen ist, die zu mindestens 80 Gew.-% Polypropylen enthält, das zuvor mindestens einmal verarbeitet, vorzugsweise mindestens einmal extrudiert worden ist, wobei die Folie ein Reckverhältnis bei der Reckung in Längsrichtung von 1:4 bis 1:10 aufweist.

DE 10 2017 203 066 beschreibt ein Klebeband mit einem Träger aus einer Folie, auf die zumindest einseitig eine Klebemasse aufgebracht ist, wobei die Folie eine monoaxial gereckte Folie ist, die zu mindestens 95 Gew.-% aus Polypropylenzusammensetzungen mit verschiedenen Phasen besteht, die umfasst: i) 80 bis 99 Gew.-% einer Polypropylenmatrix, die ein Propylenhomopolymer umfasst, und ii) 1 bis 20 Gew.-% eines Elastomers in Form eines Ethylen-Propylen-Copolymers mit einem Ethylengehalt von 50 bis 90 Gew.-%.

DE 10 2020 214 722 stellt ein Klebeband mit einem Träger aus einer Folie bereit, auf die zumindest einseitig eine Klebemasse aufgebracht ist, wobei die Folie eine monoaxial in Längsrichtung gereckte Folie ist, die zu mindestens 90 Gew.-% Polyesterpolymere enthält.

MOPP-Folien werden aufgrund ihrer hohen Zugfestigkeit in Maschinenrichtung geschätzt. Auch ist es aus wirtschaftlicher Sicht nicht immer vorteilhaft, spezielle Trägersysteme umzusetzen, insbesondere bei kleineren Losgrößen. Daher besteht weiterhin der Bedarf nach verbesserten Selbstklebebändern mit Trägern aus MOPP-Folie.

Vor diesem Hintergrund sieht die vorliegende Erfindung ihre Aufgabe in der Bereitstellung eines Selbstklebebands mit MOPP-Träger, das die Nachteile des Stands der Technik überwindet und sich vor allem durch eine verbesserte Wiederablösbarkeit auszeichnet. Diese Aufgabe wird durch ein Selbstklebeband gemäß Hauptanspruch gelöst. Bevorzugte Weiterbildungen des erfindungsgemäßen Selbstklebebands sind in den Unteransprüchen dargelegt.

Es wurde überraschend gefunden, dass die gängigen Träger aus MOPP-Folie vorteilhaft eingesetzt werden können, wenn sie mit einer entsprechend abgestimmten Haftklebemasse kombiniert werden. Auf diese Weise lassen sich Selbstklebebänder realisieren, die eine gegenüber herkömmlichen Selbstklebebändern verbesserte Wiederablösbarkeit zeigen.

Ein erster Gegenstand der vorliegenden Erfindung ist daher ein Selbstklebeband umfassend einen Träger aus einer monoaxial gereckten Polypropylen-Folie und eine Haftklebemasse, die umfasst:
a) 38 bis 65 Gew.-% einer Elastomerkomponente;
b) 8 bis 45 Gew.-% einer Klebharzkomponente; und
c) 3 bis 22 Gew.-% einer Verstärkungskomponente,
wobei sich die Gewichtsangaben jeweils auf das Gesamtgewicht der Haftklebemasse beziehen und die Summe der Anteile an Elastomerkomponente und Verstärkungskomponente in der Haftklebemasse mindestens 52 Gew.-% beträgt, bezogen auf das Gesamtgewicht der Haftklebemasse.

### i) Träger

Als Träger des erfindungsgemäßen Selbstklebebands können gängige MOPP-Folien verwendet werden, wie sie kommerziell erhältlich sind. MOPP wird aus Polypropylen via Extrusion und anschließender Verstreckung hergestellt. Die Folie kann aus reinem Polypropylen, also nur aus Propylenmonomeren, aufgebaut sein. Geeignet sind auch Polypropylen-Random-Copolymere oder Polypropylen-Block-Copolymere. Als geeignete Comonomere sind Olefine, insbesondere Ethylen und/oder Butylen, zu nennen, wobei der Anteil an Comonomeren im Polypropylen vorzugsweise weniger als 50 Gew.-%, besonders bevorzugt weniger als 30 Gew.-%, insbesondere weniger als 20 Gew.-% beträgt, jeweils bezogen auf das Gesamtgewicht der Folie. Erfindungsgemäß können auch Folien aus einem Blend aus Polypropylen und zumindest einem anderen Polymer eingesetzt werden, wobei der Anteil des oder der anderen Polymere vorzugsweise weniger als 15 Gew.-%, besonders bevorzugt weniger als 10 Gew.-%, insbesondere weniger als 5 Gew.-% beträgt, jeweils bezogen auf das Gesamtgewicht der Folie. Als weiteres Polymer kann insbesondere Polyethylen eingesetzt werden.

Im Rahmen der vorliegenden Erfindung kann als Träger auch eine MOPP-Folie eingesetzt werden, die recyceltes Polypropylen umfasst oder aus diesem besteht. Bei dem recycelten Polypropylen handelt es sich vorzugsweise um solches, das zuvor zumindest einmal verarbeitet, vorzugsweise zumindest einmal extrudiert wurde. Geeignetes Material ist beispielsweise Kantenschnitt wie er bei der Herstellung von Polypropylen-Folien anfällt. Weitere geeignete Träger-Folien sind beispielsweise in der WO 2018/154106 und WO 2014/029664 beschrieben.

Die Dicke der Trägerfolie kann je nach Bedarf angepasst werden, bewegt sich aber nach dem Recken vorzugsweise im Bereich von 20 bis 150 µm, besonders bevorzugt von 25 bis 100 µm, insbesondere 50 bis 100 µm.

Zur Herstellung der Trägerfolie kann es angebracht sein, Additive und weitere Komponenten hinzuzugeben, die die filmbildenden Eigenschaften verbessern, die Neigung zur Ausbildung von kristallinen Segmenten beeinflussen und/oder die mechanischen Eigenschaften gezielt verbessern oder gegebenenfalls verschlechtern. Die Trägerfolie kann Pigmente oder andere Farbstoffe enthalten und daher farbig, weiß, grau oder schwarz sein. Sie kann weiterhin Additive wie insbesondere Stabilisatoren und/oder Füllstoffe enthalten.

### ii) Haftklebemasse

Es wurde überraschend gefunden, dass durch die Verwendung der erfindungsgemäß bereitgestellten Haftklebemasse insbesondere die Wiederablösbarkeit des erfindungsgemäßen Selbstklebebands verbessert werden konnte.

### a) Elastomerkomponente

Im Stand der Technik werden insbesondere Synthetik- und Naturkautschuke als Haftklebemassen in Verbindung mit MOPP-Folien eingesetzt. Im Rahmen der vorliegenden Erfindung hat es sich als vorteilhaft erwiesen, Polydien-Blockcopolymere einzusetzen. In einer bevorzugten Ausführungsform umfasst die Haftklebemasse daher mindestens ein Polydien-Blockcopolymer, insbesondere ein Polyvinylaromat-Polydien-Blockcopolymer. Es können jedoch auch Polydien-Blockcopolymere genutzt werden, deren Polydien-Blöcke hydriert vorliegen.

Vorzugsweise beträgt der Anteil der Polydien-Blockcopolymere in der Elastomerkomponente mindestens 90 Gew.-%, bezogen auf das Gesamtgewicht der Elastomerkomponente. Dabei sind Polydiene bevorzugt, die auf ein konjugiertes Dien, insbesondere auf ein 1,3-Dien zurückgeführt werden können.

In einer bevorzugten Ausführungsform liegt die Elastomerkomponente in Form von Polyvinylaromat-Polydien-Blockcopolymeren mit einem Aufbau der Form A-B-A, (A-B)ₙ , (AB)ₙX oder (A-B-A)ₙX vor, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation eines oder mehrerer konjugierter Diene mit 4 bis 18 C-Atomen;
- X für den Rest eines Kopplungsreagenzes oder multifunktionellen Initiators und
- n für eine ganze Zahl ≥ 2 stehen.

Die Polyvinylaromat-Polydien-Blockcopolymere umfassen bevorzugt jeweils einen oder mehrere gummiartige Blöcke B (Elastomerblöcke, Weichblöcke) und mindestens zwei glasartige Blöcke A (Hartblöcke). Besonders bevorzugt ist in der hier beschriebenen Ausführungsform mindestens ein Polyvinylaromat-Polydien-Blockcopolymer mit einem Aufbau A-B-A, (A-B)₂X, (A-B)₃X oder (A-B)₄X, wobei für A, B und X die vorstehenden Bedeutungen gelten. Bevorzugt enthält die Elastomerkomponente zumindest ein Triblockcopolymer oder höheres Multiblockcopolymer, das linear oder mehrarmig, wie radial oder sternförmig vorliegen kann.

Bevorzugt sind, jeweils bezogen auf die Gesamtheit aller Polyvinylaromat-Polydien-Blockcopolymere der Elastomerkomponente, Polyvinylaromat-Polydien-Blockcopolymere mit einer Peakmolmasse von mindestens 90.000 g/mol, stärker bevorzugt von mindestens 120.000 g/mol. Vorzugsweise beträgt die Peakmolmasse der eingesetzten Polyvinylaromat-Polydien-Blockcopolymere höchstens 250.000 g/mol. Solche Polyvinylaromat-Polydien-Blockcopolymere sind vorzugsweise zu mindestens 30 Gew.-%, bevorzugt zu mindestens 40 Gew.-%, stärker bevorzugt zu mindestens 50 Gew.- % und sehr bevorzugt zu mindestens 60 Gew.-% und bevorzugt zu höchstens 90 Gew.-%, bezogen auf das Gesamtgewicht der Elastomerkomponente, enthalten. Die Peakmolmasse kann mittels GPC (Test la) gemäß der im Abschnitt "Testmethoden" beschriebenen Methode bestimmt werden.

Die Elastomerkomponente kann zudem ein oder mehrere Diblockcopolymere A-B enthalten. Ein zu hoher Anteil an Diblockcopolymeren wirkt sich jedoch in der Regel negativ auf die Wärmescherfestigkeit aus. Ihr Anteil in der Haftklebmasse sollte daher nicht zu hoch sein. Besonders bevorzugt beträgt der mittlere Diblock-Anteil der Polyvinylaromat-Polydien-Blockcopolymere, bezogen auf die Gesamtheit aller Polyvinylaromat-Polydien-Blockcopolymere der Elastomerkomponente, maximal 40 Gew.-%, insbesondere maximal 30 Gew.-% und ganz besonders bevorzugt maximal 25 Gew.-%. Insbesondere umfasst die Haftklebemasse des erfindungsgemäßen Selbstklebebands ein Gemisch aus Polyvinylaromat-Polydien-Blockcopolymeren mit einem Aufbau A-B, A-B-A, (A-B)₃X oder (AB)₄X, das besonders bevorzugt ein radiales Blockcopolymer und/oder Triblockcopolymere AB-A umfasst. Ebenfalls bevorzugt ist ein Gemisch aus Triblockcopolymeren und (A-B)ₙ - oder (A-B)ₙX-Blockcopolymeren mit n größer/gleich 3. Die aus den A- und B-Blöcken resultierenden Blockcopolymere können grundsätzlich gleiche oder unterschiedliche B-Blöcke enthalten. Die Blockcopolymere können lineare A-B-A-Strukturen aufweisen, von radialer Gestalt sein und sternförmige und lineare Multiblockcopolymere umfassen.

Vinylaromaten zum Aufbau des Blocks A umfassen bevorzugt Styrol und Styrol-Derivate, besonders bevorzugt Styrol und α-Methylstyrol. Der Block A kann als Homo- oder Copolymer vorliegen. Besonders bevorzugt ist der Block A ein Polystyrolblock. Anstelle der bevorzugten Polystyrolblöcke können als Vinylaromaten aber auch Polymerblöcke auf Basis anderer aromatenhaltiger Homo- und Copolymere, bevorzugt von C8- bis C12-Aromaten, insbesondere mit Glasübergangstemperaturen von größer 75 °C genutzt werden, zum Beispiel α-Methylstyrol-haltige Aromatenblöcke. Die Glasübergangstemperatur kann beispielsweise mittels DSC (Test II) bestimmt werden.

Die erfindungsgemäß eingesetzten Polyvinylaromat-Polydien-Blockcopolymere können gleiche oder unterschiedliche A-Blöcke enthalten. Bevorzugt haben die Polyvinylaromat-Polydien-Blockcopolymere Polystyrolendblöcke. Die Monomere für den Weichblock B sind bevorzugt konjugierte Diene, insbesondere solche ausgewählt aus der Gruppe bestehend aus Butadien, Isopren, Ethylbutadien, Phenylbutadien, Piperylen, Pentadien, Hexadien, Ethylhexadien, Farnesen und Dimethylbutadien sowie beliebigen Mischungen dieser Monomere. Auch der Block B kann als Homopolymer oder als Copolymer vorliegen. Besonders bevorzugt sind die Monomere für den Weichblock B ausgewählt aus Butadien und Isopren. Beispielsweise ist der Weichblock Bein Polyisoprenblock oder ein Polybutadienblock oder ein Polymerblock aus einem Gemisch aus Butadien und Isopren. Ganz besonders bevorzugt ist der Block B ein Polyisopren. Die aus diesen bevorzugten und anderen Dien-Monomeren erzeugten Weichblöcke B, können zudem hydriert sein und entsprechend insbesondere als Poly(Ethylen-co-Butylen)- oder Poly(Ethylen-co-Propylen)-Blöcke vorliegen.

Die A-Blöcke der Polyvinyaromat-Polydien-Blockcoplymer haben bevorzugt eine Glasübergangstemperatur von mindestens 25 °C, insbesondere mindestens 50 °C. Für die B-Blöcke ist eine Glasübergangstemperatur von maximal 0 °C, insbesondere maximal -25 °C bevorzugt. Diese Angaben beziehen sich auf die reinen, unabgemischten Blockcopolymere und werden erfindungsgemäß mittels DSC ermittelt (Test II).

Der Anteil an A-Block in den Polyvinylaromat-Polydien-Blockcopolymeren liegt bevorzugt bei mindestens 12 Gew.-% und maximal bei 40 Gew.-%, stärker bevorzugt bei mindestens 15 Gew.-% und bevorzugt bei maximal 20 Gew.-%. Bevorzugt beträgt der Anteil der Gesamtheit aller Polyvinylaromat-Polydien-Blockcopolymere, bezogen auf die gesamte Elastomerkomponente, mindestens 38 Gew.-% und maximal 65 Gew.-%, stärker bevorzugt mindestens 42 Gew.-% und maximal 60 Gew.-%. Es wurde festgestellt, dass ein zu geringer Anteil an Polyvinylaromat-Polydien-Blockcopolymeren zur Folge hat, dass die Wärmescherfestigkeit der Haftklebmasse sinkt, während ein zu hoher Anteil an Polyvinylaromat-Polydien-Blockcopolymeren wiederum zur Folge hat, dass die Haftklebmasse zu viel an Klebvermögen verliert, so dass das Selbstklebeband für einzelne Anwendungen nicht mehr geeignet sein kann.

Die aus den A- und B-Blöcken resultierenden Blockcopolymere können gleiche oder unterschiedliche B-Blöcke enthalten, auch im Hinblick auf die Mikrostruktur. Mit "Mikrostruktur" ist das relative Verhältnis der für Polybutadien, Polyisopren oder ein anderes konjugiertes Dien, insbesondere 1,3-Dien, möglichen Monomerverknüpfungsarten 1,4-*cis* (in Polybutadien und Polyisopren), 1,4-*trans* (in Polybutadien und Polyisopren), 1,2 (in Polybutadien und Polyisopren) und 3,4 (in Polyisopren) gemeint. Sie kann durch Vergleich der Integrale der den entsprechenden Gruppen zuzuordnenden Signale über ¹H-NMR ermittelt werden. Bevorzugt beträgt der 1,4-Anteil (*cis* + *trans*) > 80 Gew.-%, stärker bevorzugt > 85 Gew.-%, jeweils bezogen auf die Polydienblöcke und der 1,4-cis-Anteil > 40 Gew.-%, bezogen auf die Polydienblöcke; entsprechend beträgt der Anteil an 1,2- und/oder etwaig vorhandenen 3,4-verknüpften Monomere in Summe, d.h. der sogenannte Vinyl-Anteil, bevorzugt weniger als 20 Gew.-%, stärker bevorzugt maximal 17 Gew.%, insbesondere höchstens 13 Gew.-%. Ein hoher Anteil an 1,4-Verknüpfung und insbesondere 1,4-*cis*-Verknüpfung der Monomereinheiten in den Polydien-Blöcken bzw. ein geringer Anteil an Vinyl-Gruppen führt zu einer geringeren Glasübergangstemperatur, so dass eine gute Schockbeständigkeit auch in kalter Umgebung erreicht werden kann. Polybutadien ist auch aus diesem Grund ein bevorzugtes Monomer für den B-Block bzw. die B-Blöcke. In einer alternativen Ausführungsform beziehen sich die quantitativen Angaben zu den Monomerverknüpfungsarten, wie insbesondere zum Vinylanteil, anstelle von Gew.-% auf mol-%.

Die obigen Angaben zur Molmasse der Blockcopolymere beziehen sich jeweils auf diejenige Polymermode, die der in dem entsprechenden Zusammenhang genannten Blockcopolymerarchitektur von einem Fachmann zugeordnet werden kann. Angaben zur Molmasse sind in diesem Zusammenhang als Peakmolmasse zu verstehen. GPC erlaubt üblicherweise die Feststellung der Molmasse der einzelnen Polymermoden in einer Mischung aus verschiedenen Blockcopolymeren.

In einer besonders bevorzugten Ausführungsform handelt es sich bei der Elastomerkomponente um ein Styrol-Butadien-Styrol-Blockcopolymer (SBS) oder um ein Styrol-Isopren-Styrol-Blockcopolymer (SIS), insbesondere um ein SIS-Blockcopolymer. Weiterhin sind hydrierte Blockcopoymere wie Styrol-(Ethylen-co-Butylen)-Styrol-Blockcopolymer (SEBS) und Styrol-(Ethylen-co-Propylen)-Styrol-Blockcopolymer (SEPS) einsetzbar.

### b) Klebharzkomponente

Erfindungsgemäß weist die Haftklebemasse neben der Elastomerkomponente weiterhin eine Klebharzkomponente auf. Die Klebharzkomponente wird insbesondere eingesetzt, um die Adhäsion in gewünschter Weise einzustellen. Unter einem "Klebharz" wird entsprechend dem allgemeinen Verständnis des Fachmanns ein oligomeres oder polymeres Harz verstanden, das die Adhäsion, also die Eigenklebrigkeit der Haftklebemasse im Vergleich zu einer keinen Klebharz enthaltenden, ansonsten aber identischen Haftklebemasse erhöht. Klebharze sind spezielle Verbindungen mit im Vergleich zu den Elastomeren niedriger Molmasse, üblicherweise mit einem gewichtsmittleren Molekulargewicht M_{w} von kleiner 5.000 g/mol. Typischerweise beträgt das gewichtsmittlere Molekulargewicht einer im Rahmen der vorliegenden Erfindung verwendeten Klebharzkomponente von 400 bis 5.000 g/mol, bevorzugt von 500 bis 2.000 g/mol, bestimmt durch GPC (Test Ib).

Die Klebharzkomponente ist im Rahmen der vorliegenden Erfindung nicht als Verstärkungskomponente zu verstehen, d.h. die Klebharzkomponente ist bevorzugt im Wesentlichen nicht mit den Hartblöcken der Polydien-Blockcopolymere verträglich.

Die Klebharzkomponente ist insbesondere mit der Elastomerkomponente verträglich und hier vor allem mit den Polydien-Blöcken. Hierbei haben sich insbesondere bei der Verwendung von Polyvinylaromat-Polydien-Blockcopolymeren Kohlenwasserstoffharze oder Polyterpenharze als geeignet erwiesen. Daher werden bevorzugt Klebharze verwendet, bei denen es sich zu mindestens 75 Gew.-%, bezogen auf das Gesamtgewicht der Klebharzkomponente, um Kohlenwasserstoffharze oder Polyterpenharze oder eine Mischung dergleichen handelt.

Vorzugsweise enthält die Klebharzkomponente der Haftklebemasse zu mindestens 75 Gew.-% bezogen auf die Klebharzkomponente zumindest ein Klebharz, das einen DACP (diacetone alcohol cloud point, Test Illa) von mindestens -20 °C, bevorzugt mindestens 0 °C, sehr bevorzugt mindestens +20 °C aufweist. Weiterhin bevorzugt weist die Klebharzkomponente eine Erweichungstemperatur (Ring & Ball, Test IV) von mindestens +85 °C, vorzugsweise mindestens +100 °C und höchstens +140 °C auf. Methoden zur Bestimmung des DACP und der Erweichungstemperatur sind im Abschnitt "Testmethoden" angegeben.

Vorzugsweise ist die Klebharzkomponente ausgewählt aus der Gruppe bestehend aus unpolaren Kohlenwasserstoffharzen, vorzugsweise hydrierten und nicht hydrierten Polymerisaten des Dicyclopentadiens (DCPD); nicht hydrierten, partiell, selektiv oder vollständig hydrierten Kohlenwasserstoffharzen auf Basis von C5- oder C5/C9-Monomerströmen oder partiell, selektiv oder vollständig hydrierten Kohlenwasserstoffharzen auf Basis von C9-Monomerströmen. Weitere für die Klebharzkomponente einsetzbare Klebharze sind Polyterpenharze auf Basis von α-Pinen und/oder β-Pinen und/oder δ-Limonen, die auch hydriert sein können.

Vorgenannte Klebharze können sowohl allein als auch im Gemisch eingesetzt werden. Insbesondere in Kombination mit Polyisopren-Blockcopolymer(en) sind hydrierte Kohlenwasserstoffharze wie hydrierte C5-Harze, hydrierte C9-Harze und/oder hydrierte DCPD-Harze vorzüglich geeignet.

Denkbar sind jedoch auch Sauerstoff-haltige Klebharze wie Terpenphenol-Harze oder Kolophonium-haltige Harze, insbesondere Kolophoniumester. Kolophoniumharze und Kolophoniumester-Harze können hydriert oder nicht hydriert oder disproportioniert oder anderweitig stabilisiert sein.

Der Anteil an Klebharzkomponente in der Haftklebemasse wirkt sich positiv auf die Verklebungsfestigkeit aus. Daher sollte der Klebharzanteil nicht zu gering sein. Es hat sich allerdings gezeigt, dass ein zu hoher Anteil an Klebharz(en) einen negativen Einfluss auf die Wärmescherfestigkeit und insbesondere auf die Wiederablösbarkeit hat. Der Anteil an Klebharzkomponente liegt daher im Sinne dieser Erfindung bei mindestens 8 Gew.-% und maximal 45 Gew.-%, bevorzugt bei maximal 40 Gew.-%, sehr bevorzugt bei maximal 35 Gew.-%, jeweils in Bezug auf das Gesamtgewicht der Haftklebemasse. Sehr vorteilhaft ist auch ein Harzanteil von maximal 30 Gew.-% oder sogar maximal 20 Gew.-%.

### c) Verstärkungskomponente

Ohne an eine bestimmte Theorie gebunden zu sein, wird davon ausgegangen, dass insbesondere die Anwesenheit der Verstärkungskomponente in Verbindung mit der MOPP-Folie als Träger für die verbesserten Wiederablöseeigenschaften des erfindungsgemäßen Selbstklebebands sorgt.

Die Verstärkungskomponente ist im Rahmen der vorliegenden Erfindung nicht als Klebharzkomponente zu verstehen, d.h. die Verstärkungskomponente ist bevorzugt im Wesentlichen nicht mit den Weichblöcken, d.h. der Polydien-Blöcke verträglich.

Als Verstärkungskomponente werden erfindungsgemäß insbesondere sogenannte Endblockverstärker eingesetzt.

Unter Endblockverstärkern sind solche Materialien zu verstehen, die im Wesentlichen mit den Hartblöcken der Polydien-Blockcopolymere verträglich sind.

Erfindungsgemäß ist die Verstärkungskomponente wenigstens ein Harz.

Sofern es sich bei den Hartblockarten um Polyvinylaromat-Blöcke handelt, ist die Verstärkungskomponente vorzugsweise wenigstens ein Harz basierend auf wenigstens einer, insbesondere aromatischen, Kohlenwasserstoffverbindung, vorzugsweise erhalten aus C8- und/oder C9-Strömen und die bevorzugt ausgewählt ist aus der Gruppe bestehend aus Styrol, alpha-Methylstyrol, para-Methylstyrol, Inden, Methylinden und Copolymeren daraus. Für die Verstärkungskomponente kann auch ein sauerstoffhaltiges Harz gewählt werden wie Terpenphenolharze, Inden-Coumaron-Harze oder Phenol-modifizierte Aromatenharze.

Das wenigstens eine Harz der Verstärkungskomponente weist ein gewichtsmittleres Molekulargewicht M_{w} von mindestens 800 g/mol, vorzugsweise von 1.000 g/mol bis 15.000 g/mol, bevorzugt 2.000 g/mol bis 10.000 g/mol, bestimmt mittels GPC (Test Ib), auf.

Das wenigstens eine Harz der Verstärkungskomponente weist einen MMAP-Trübungspunkt (Mixed Methylcyclohexan Anilin Cloud Point, Test Illb) von höchstens 30 °C, bevorzugt von höchstens 20 °C auf.

Der Erweichungspunkt des wenigstens einen Harzes der Verstärkungskomponente liegt vorzugsweise bei mindestens 130 °C, bevorzugt bei mindestens 140 °C, besonders bevorzugt bei mindestens 150 °C, bestimmt gemäß Test IV.

Der Anteil der Verstärkungskomponente, bezogen auf das Gesamtgewicht der Haftklebemasse liegt bei mindestens 3 Gew.-% und höchstens 22 Gew.-%, bevorzugt bei mindestens 8 Gew.-% und höchstens 18 Gew.-%.

Es hat sich gezeigt, dass der Anteil der Elastomerkomponente und der Anteil der Verstärkungskomponente einen vorteilhaften Einfluss auf die Leistungsfähigkeit von MOPPhaltigen Selbstklebebändern haben. Hier hat es sich als besonders vorteilhaft im Hinblick auf die Wiederablösbarkeit erwiesen, wenn sich die Haftklebemasse zum Großteil aus Elastomerkomponente und Verstärkungskomponente zusammensetzt. Daher beträgt die Summe der Anteile an Elastomerkomponente und Verstärkungskomponente in der Haftklebemasse mindestens 52 Gew.-%, bezogen auf das Gesamtgewicht der Haftklebemasse. Weiterhin ist eine Ausführungsform bevorzugt, in der die Summe aus Elastomerkomponente und Verstärkungskomponente bei mindestens 55 Gew.-%, insbesondere bei mindestens 60 Gew.-% liegt, bezogen auf das Gesamtgewicht der Haftklebemasse.

Unter dem Ausdruck "im Wesentlichen unverträglich" oder "im Wesentlichen nicht verträglich" wird im Rahmen der vorliegenden Erfindung insbesondere verstanden, dass die angesprochenen Bestandteile bzw. Komponenten zu höchstens 10 Gew.-%, bevorzugt zu höchstens 5 Gew.-%, miteinander mischbar sind.

Unter dem Ausdruck "im Wesentlichen verträglich" wird im Rahmen der vorliegenden Erfindung insbesondere verstanden, dass die angesprochenen Bestandteile bzw. Komponenten zu mindestens 90 Gew.-%, bevorzugt zu mindestens 95 Gew.-%, miteinander mischbar sind.

### d) weitere Komponenten

Die Haftklebemasse des erfindungsgemäßen Selbstklebebands kann neben den genannten Komponenten weitere Komponenten enthalten. Besonders bevorzugt weist die Haftklebemasse weiterhin eine Weichmacherkomponente auf.

Die Weichmacherkomponente dient vor allem zur finalen Feineinstellung der Kohäsions-/Adhäsions-Balance. Vorzugsweise handelt sich bei der Weichmacherkomponente um ein oder mehrere Weichharze und/oder ein oder mehrere Mineralöle mit einer Erweichungstemperatur, bestimmt gemäß Test IV, von unter 30 °C. Bevorzugt ist ein Weichharz oder Weichharzgemisch und sehr bevorzugt ein Weichharz oder Weichharzgemisch mit einer Schmelzviskosität (Test V) bei 25 °C und 1 Hz von zumindest 20 Pa*s, bevorzugt von zumindest 50 Pa*s. Bei dem Weichharz handelt es sich sehr bevorzugt um ein Kohlenwasserstoff- oder Polyterpen-basierendes Weichharz.

Die Weichmacherkomponente liegt in der Haftklebemasse vorzugsweise in einer Menge von mindestens 3 und/oder höchstens 25 Gew.-%, bevorzugt mindestens 8 Gew.-% und höchstens 18 Gew.-%, bezogen auf Gesamtgewicht der Haftklebemasse vor. Es hat sich überraschend gezeigt, dass durch die Verwendung der Weichmacherkomponente, insbesondere einem Weichharz, die Wiederablösbarkeit des Selbstklebebands weiter verbessert werden kann. Dagegen hat sich die Anwesenheit von Mineralöl oder Mischungen aus Mineralölen, die gängigerweise ebenfalls als Weichmacher eingesetzt werden, als negativ für die Wiederablösbarkeit herausgestellt. Daher ist eine Ausführungsform bevorzugt, in der der Anteil von Mineralöl und/oder Mischungen von Mineralölen in der Haftklebemasse höchstens 3 Gew.-%, mehr bevorzugt höchstens 1,5 Gew.-% beträgt.

Trotz ihres negativen Einflusses kann ein höherer Gehalt an Mineralöl und/oder Mineralölgemischen bevorzugt sein. Für solche Ausführungsformen, in denen der Anteil an Mineralöl und/oder Mineralölgemischen mehr als 3 Gew.-% in Bezug auf das Gesamtgewicht der Haftklebemasse beträgt, wird ein Anteil der Verstärkungskomponente von bevorzugt mindestens 10 Gew.-% gewählt, ebenfalls in Bezug auf das Gesamtgewicht der Haftklebemasse.

Zur Einstellung weiterer Eigenschaften kann die Haftklebemasse weitere Additive enthalten. Vorzugsweise beträgt deren Anteil jedoch nicht mehr als 18 Gew.-% der Haftklebemasse, vorzugsweise nicht mehr als 10 Gew.-%.

Bei diesen Additiven handelt es sich vor allem um Schutzmittel. Hier seien Alterungsschutzmittel primärer und sekundärer Art, Licht- und UV-Schutzmittel sowie Flammschutzmittel genannt, aber auch Füllstoffe, Farbstoffe und Pigmente. Die Haftklebmasseschicht kann so beliebig gefärbt oder weiß, grau oder schwarz sein. Als solche oder andere weitere Additive können typischerweise genutzt werden:
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse,
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse,
- Prozessstabilisatoren wie zum Beispiel C-Radikalfänger, vorzugsweise mit einem Anteil von 0,2 bis 1 Gew.-% bezogen auf das Gesamtgewicht der Haftklebemasse,
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse,
- Verarbeitungshilfsmittel, vorzugsweise mit einem Anteil von 0,2 bis 1 Gew.-% bezogen auf das Gesamtgewicht der Haftklebemasse
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die zumindest eine Haftklebemasseschicht weist typischerweise eine Schichtdicke von ungefähr mindestens 10 µm und maximal 150 µm auf, häufiger mindestens 20 µm und maximal 100 µm. Besonders bevorzugt sind Schichtdicken im Bereich von mindestens 25 µm und maximal 60 µm.

Je nach Ausführungsform kann die Haftklebemasse einseitig oder beidseitig in Bezug auf den Träger angeordnet sein, so dass sich ein einseitig klebendes oder beidseitig klebendes Klebeband ergibt.

Der allgemeine Ausdruck "Klebeband" oder "Selbstklebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden.

Als Trennmaterial eignet sich bevorzugt ein nicht-fusselndes Material wie eine Kunststofffolie oder ein gut verleimtes, langfaseriges Papier.

Die Klebebänder weisen insbesondere Lauflängen von 25 bis 100 m in Form der üblichen Klebebandrollen und von 1.000 bis 30.000 m in Form von Spulen auf.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv (antiadhäsiv) wirkende Stoffe ausgerüstet sein. Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C14 - bis C28 -Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethylsiloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew. %, besonders bevorzugt 13 bis 18 Gew.-% des trennwirksamen Bestandteils.

Zusätzlich zu der Releaseschicht kann eine Antistatik-Beschichtung auf der Oberseite der Folie vorhanden sein, beispielsweise in Form von Amin- oder Amidwachsen wie zum Beispiel Atmer (Croda) oder Arquad T50. Diese Beschichtung ist vorteilhaft, weil die statische Haftung des Klebebands an Fingern und Gegenständen verhindert wird.

Um die Verankerung der zumindest einen Haftklebemasseschicht auf der zumindest einen Trägerschicht in gewünschtem Maß einzustellen, ist die Trägerschicht vorzugsweise chemisch und/oder physikalisch vorbehandelt. Chemische Vorbehandlung erfolgt durch Aufbringung einer funktionellen Schicht, insbesondere mittels einer Primerschicht nach dem Stand der Technik. Physikalische Vorbehandlung kann durch Corona-Behandlung (insbesondere unter Luft- oder Stickstoffatmosphäre) und/oder Beflammung und/oder Plasmabehandlung und/oder weitere Methoden zur Oberflächenaktivierung inline oder offline erfolgen.

Erfindungsgemäße Klebebänder werden vorzugsweise in den Breiten 9 bis 50 mm, insbesondere 19 bis 25 mm verwendet und besitzen dabei eine bevorzugte Dicke von 40 bis 200 µm, vorzugsweise 50 bis 180 µm, weiter vorzugsweise 60 bis 130 µm. Als Breite der Rollen werden üblicherweise 10, 15, 19, 25, 30 und 50 mm gewählt.

Das erfindungsgemäße Selbstklebeband weist vorzugsweise eine Klebkraft (Stahl) im Bereich von 2,5 bis 8,5 N/cm, besonders bevorzugt 3,5 bis 7,0 N/cm auf. Die Klebkraft kann gemäß der im Abschnitt "Testmethoden" beschriebenen Methode bestimmt werden (Test VI). Eine Verklebungsfestigkeit im angegebenen Bereich erlaubt eine sichere Fixierung beweglicher Gegenstände während des Transports und ermöglicht gleichzeitig ein einfaches und rückstandsloses Wiederablösen des Selbstklebebands.

Das erfindungsgemäße Selbstklebeband weist weiterhin eine Wärmescherfestigkeit (SAFT) von vorzugsweise größer oder gleich 95 °C, besonders bevorzugt von größer oder gleich 115 °C auf. Die Methode zur Bestimmung der Wärmescherfestigkeit ist ebenfalls im Abschnitt "Testmethoden" beschrieben (Test VII).

Es ist erfindungswesentlich, dass das Selbstklebeband ein gute Wiederablösbarkeit aufweist, die nach Testmethode VIII bei mindestens "+" liegt. Dazu braucht das Selbstklebeband nicht notwendigerweise eine Klebkraft und/oder eine Wärmescherfestigkeit im oben genannten vorzugsweisen Leistungsbereich zu zeigen.

Neben einer guten Wiederablösbarkeit zeichnet sich das erfindungsgemäße Selbstklebeband weiterhin durch seine nachhaltige Herstellbarkeit aus. Es wurde gefunden, dass hierbei auf den Einsatz von Lösungsmitteln verzichtet werden kann. Daher ist eine Ausführungsform bevorzugt, in der die Haftklebemasse durch lösungsmittelfreies Mischen hergestellt wird. Dies erfolgt vorzugsweise kontinuierlich in einem Compoundierextruder, wobei Doppelschneckenextruder besonders bevorzugt sind.

Ein weiterer Gegenstand der vorliegenden Erfindung ist ein Verfahren zur Herstellung des erfindungsgemäßen Selbstklebebands. Im Rahmen des erfindungsgemäßen Herstellungsverfahrens wird die Haftklebemasse lösemittelfrei mittels Extrusion oder Kontaktdüsenbeschichtung auf den Träger aufgebracht. Die Haftklebemasse kann dabei sowohl einseitig als auch beidseitig auf den Träger aufgebracht werden.

Auch wenn lösemittelfreie Verarbeitung bevorzugt wird, so ist es dennoch ebenfalls möglich, die Haftklebemasse in einem organischen Lösemittel oder in einer Kombination aus organischen Lösemitteln herzustellen und zu beschichten. Selbstklebebändern erhält man dann nach Trocknung der Beschichtung.

Neben dem Verfahren zu seiner Herstellung betrifft die vorliegende Erfindung weiterhin die Verwendung des erfindungsgemäßen Selbstklebebands. Daher ist ein weiterer Gegenstand der vorliegenden Erfindung die Verwendung eines Selbstklebebands gemäß der Erfindung als Fixierungsklebeband, zur Transportsicherung, zum Bündeln, Verpacken, Palettisieren und/oder zur Kantenverstärkung.

Des Weiteren lassen sich mit dem Klebeband bewegliche Teile wie Türen, Klappen usw. an Druckern oder Kühlschränken während des Transports vom Hersteller zum Verkäufer beziehungsweise weiter zum Käufer hervorragend fixieren.

Das erfindungsgemäße Klebeband ist aufgrund der geschilderten Eigenschaften auch in folgenden Anwendungen vorteilhaft einsetzbar:
a) Bei der temporären Fixierung von größeren Bauteilen wie zum Beispiel Windschutzscheiben von Autos nach dem Einsetzen in den Rahmen bis zur Aushärtung des PU-Flüssigklebers, um ein Verrutschen während des Aushärteprozesses zu verhindern.
b) Beim Endtabbing (Endlagenverklebung) von Metall-Coils mit dem Anspruch der rückstandsfreien Wiederablösbarkeit.
c) Beim temporären Verschließen von Behältern oder generelles Bekleben von Oberflächen mit der Anforderung auf rückstandsfreie Wiederablösbarkeit.

Die vorliegende Erfindung wird anhand der nachfolgenden Beispiele verdeutlicht, wobei diese keinesfalls als Einschränkung des Erfindungsgedanken zu verstehen sind.

### Beispiele:

Die Herstellung der Muster erfolgte entweder aus Lösung oder lösemittelfrei durch Extrusion. Die gewählte Herstellmethode ist bei den jeweiligen Einzelbeispielen entsprechend vermerkt.

Lösungsmittelbasiert wurden die vorgesehenen Rohstoffe in ein Musterglas eingewogen und mit einem Lösemittelgemisch bestehend aus Aceton, Siedegrenzenbenzin und Toluol (Gewichtanteile 16:54:30 bezogen auf die Lösemittelgesamtmenge) versehen und auf einer Rollbank für 48 h belassen, so dass eine 40 Gew.-% Lösung erhalten wurde. Die Lösungen wurden mittels eines Rakels auf eine mit 60 W min / m² N₂-Corona-vorbehandelte 85 µm dicke MOPP-Folie beschichtet, so dass nach Trocknung bei 120 °C für 15 min in einem Trockenschrank ein Massenauftrag von 30 g/m² erhalten wurde. Die getrocknete Haftklebemasseschicht wurde bis zur weiteren Ausprüfung mit einer Lage eines silikonisierten Trennpapiers abgedeckt.

Es wurden außerdem Muster durch Extrusion hergestellt. Compoundierung erfolgte dabei in einem Doppelschneckenextruder bei 180 °C, der inline eine Hotmeltdüse speiste. Beschichtung erfolgte im Kontaktverfahren bei 180 °C, wobei die zu beschichtende MOPP-Folie über eine Gegenwalze (Chill-roll) zugeführt wurde. Die Chill-Roll-Temperatur lag bei 15 °C. Beschichtung der MOPP-Folie erfolgte innerhalb 24 h nach Corona-Vorbehandlung, die unter Stickstoff bei 100 W min / m² erfolgte.

### Verwendete Chemikalien

| **Komponente** | **Beschreibung** |
|---|---|
| Elastomerkomponente | |
| Elastomer 1 | SIS linear |
| | Triblockcopolymer; |
| | PS-Anteil 16 Gew.-% |
| | Diblock-Anteil: 18 Gew.-% |
| | Peak-MW: 180.000 g/mol |
| Elastomer 2 | SEBS linear |
| | Triblockcolymer; |
| | PS-Anteil 13 Gew.-% |
| | Diblock-Anteil: 29 Gew.-% |
| | Peak-MW: 120.000 g/mol |

| Klebharzkomponente | |
|---|---|
| Harz 1 | C₉ KW-Harz; |
| | Erw.-Punkt: 96 °C |
| | DACP: 45 °C |
| | vollhydriert |
| Harz 2 | C₅ KW-Harz; |
| | Erw.-Punkt: 90 °C |
| | DACP: 47 °C |
| Harz 3 | C₉ KW-Harz; |
| | Erw.-Punkt: 88 °C |
| | DACP: 39 °C vollhydriert |

| Weichmacher | |
|---|---|
| Weichmacher 1 | C₅ KW-Flüssigharz |
| | Peak-MW: 500 g/mol |
| | MW: 650 g/mol |
| Weichmacher 2 | naphthenisches Mineralöl |
| | Peak-MW: 950g/mol |
| | MW: 920 g/mol |

| Verstärkungskomponente | |
|---|---|
| Verstärker 1 | Aromatisches KW-Harz; |
| | Erw.-Punkt:153 °C |
| | MMAP: 16 °C |
| | MW: 6.600 g/mol |
| Verstärker 2 | Polymerisiertes |
| | Kolophonium |
| | Erw.-Punkt: 145 °C |
| | MMAP: -5 °C |
| | MW: 546 g/mol |

| Additiv | |
|---|---|
| Additiv1 | Antioxidant basierend auf sterisch gehindertem Phenol |
| Additiv 2 | Sekundäres Alterungsschutzmittel auf Phosphit-Basis |

Es wurden die folgenden erfindungsgemäßen Selbstklebebänder (E) hergestellt und ihre Eigenschaften analysiert und mit denen von Vergleichsklebebändern (C) verglichen (Prozentangaben jeweils in Gew.-%).

| | E1 | E2 | E3 |
|---|---|---|---|
| Herstellmethode | Lösemittel | Lösemittel | Extrusion |
| Elastomer 1 | 59,0 % | 59,0 % | 51,0 % |
| Harz 1 | | 15,0 % | 10,0 % |
| Harz 2 | 15,0 % | | |
| Weichmacher 1 | 15,0 % | 15,0 % | 18,0 % |
| Weichmacher 2 | | | |
| Verstärker 1 | 10,0 % | 10,0 % | 20,0 % |
| Additiv1 | 0,5 % | 0,5 % | 0,5 % |
| Additiv 2 | 0,5 % | 0,5 % | 0,5 % |
| Summe Elastomer- + Verstärkungskomponente | 69,0 % | 69,0 % | 71,0 % |
| | | | |
| Klebkraft | 5,0 N/cm | 3,1 N/cm | 3,1 N/cm |
| SAFT | 123 °C | 125 °C | 106 °C |
| Wiederablösbarkeit | ++ | ++ | ++ |

| | C1 | C2 | C3 | C4 |
|---|---|---|---|---|
| Herstellmethode | Lösemittel | Lösemittel | Lösemittel | Extrusion |
| Elastomer 1 | 45,4 % | 43,5 % | 41,6% | 52,0 % |
| Harz 1 | | | | 47,0 % |
| Harz 2 | 50,0 % | 47,8 % | 45,8 % | |
| Weichmacher 1 | | | | |
| Weichmacher 2 | 4,5 % | 4,3 % | 4,2 % | |
| Verstärker 1 | | 4,3 % | 8,3 % | |
| Additiv 1 | 0,1 % | 0,1 % | 0,1 % | 0,5 % |
| Additiv 2 | | | | 0,5 % |
| Summe Elastomer- + Verstärkungskomponen te | 45,4 % | 47,8 % | 49,9 % | 52,0 % |
| | | | | |
| Klebkraft | 5,9 N/cm | 5,9 N/cm | 5,8 N/cm | 7,2 N/cm |
| SAFT | 110 °C | 113 °C | 122 °C | 103 °C |
| Wiederablösbarkeit | - | - | -- | -- |

| | E4 | E5 | E6 | E7 |
|---|---|---|---|---|
| Herstellmethode | Extrusion | Extrusion | Extrusion | Lösemittel |
| Elastomer 1 | 56,0 % | 41,0 % | 45,0 % | |
| Elastomer 2 | | | | 59,0 % |
| Harz 1 | 10,0 % | 29,0 % | 18,0 % | |
| Harz 2 | | | | 15,0 % |
| Weichmacher 1 | 18,0 % | 16,0 % | 18,0 % | 15,0 % |
| Weichmacher 2 | | | | |
| Verstärker 1 | 15,0 % | 13,0 % | 18,0 % | 10,0 % |
| Additiv 1 | 0,5 % | 0,5 % | 0,5 % | 0,5 % |
| Additiv 2 | 0,5 % | 0,5 % | 0,5 % | 0,5 % |
| Summe Elastomer- + Verstärkungskomponente | 71,0 % | 54,0 % | 63,0 % | 69,0 % |
| | | | | |
| Klebkraft | 3,5 N/cm | 6,9 N/cm | 4,5 N/cm | 1,8 N/cm |
| SAFT | 113 °C | 106 °C | 107 °C | 129 °C |
| Wiederablösbarkeit | ++ | ++ | ++ | ++ |

| | C5 | C6 | C7 | C8 |
|---|---|---|---|---|
| Herstellmethode | Extrusion | Extrusion | Extrusion | Lösemittel |
| Elastomer 1 | 40,0 % | 34,0 % | 66,0 % | 59,0 % |
| Harz 1 | 43,0 % | 37,0 % | 26,0 % | |
| Harz 2 | | | | 15,0 % |
| Weichmacher 1 | 16,0 % | 14,0 % | 7,0 % | 15,0 % |
| Weichmacher 2 | | | | |
| Verstärker 1 | | 14,0 % | | |
| Verstärker 2 | | | | 10,0 % |
| Additiv 1 | 0,5 % | 0,5 % | 0,5 % | 0,5 % |
| Additiv 2 | 0,5 % | 0,5 % | 0,5 % | 0,5 % |
| Summe Elastomer- + Verstärkungskomponente | 40,0 % | 48,0 % | 66,0 % | 69,0 % |
| | | | | |
| Klebkraft | 6,2 N/cm | 8,2 N/cm | 1,2 N/cm | 5,8 N/cm |
| SAFT | 86 °C | 94 °C | 106 °C | 110 °C |
| Wiederablösbarkeit | - | -- | -- | - |

| | E8 | E9 | E10 | E11 |
|---|---|---|---|---|
| Herstellverfahren | Extrusion | Extrusion | Extrusion | Extrusion |
| Elastomer 1 | 45,0 % | 39,0 % | 51,0 % | 57,0 % |
| Harz 1 | 34,0 % | | 15,0 % | 35,0 % |
| Harz 2 | | | | |
| Harz 3 | | 25,0 % | | |
| Weichmacher 1 | 11,0 % | 18,0 % | 18,0 % | |
| Weichmacher 2 | | | | |
| Verstärker 1 | 9,0 % | 17,0 % | 15,0 % | 7,0 % |
| Additiv 1 | 0,5 % | 0,5 % | 0,5 % | 0,5 % |
| Additiv 2 | 0,5 % | 0,5 % | 0,5 % | 0,5 % |
| Summe Elastomer- + Verstärkungskomponente | 54,0 % | 56,0 % | 66,0 % | 64,0 % |
| | | | | |
| Klebkraft | 6,7 N/cm | 7,1 N/cm | 7,2 N/cm | 5,0 N/cm |
| SAFT | 105 °C | 105 °C | 104 °C | 113 °C |
| Wiederablösbarkeit | ++ | + | ++ | ++ |

Im Gegensatz zu den Vergleichsklebebändern C1 bis C8 weisen die erfindungsgemäßen Selbstklebebänder E1 bis E11 eine zufriedenstellende (+) bis sehr gute (++) Wiederablösbarkeit auf. Wie den Daten ebenfalls zu entnehmen ist, wirkt sich die Begrenzung des Mineralölanteils sowie ein Anteil an Elastomerkomponente und Verstärkungskomponenten in der Haftklebemasse von mindestens 52 Gew.-% vorteilhaft auf die Wiederablösungseigenschaften aus.

### Testmethoden:

### Test I - Molmasse (GPC)

### (a) Peakmolmasse von einzelnen Blockcopolymermoden

Polymere sind im Hinblick auf die Molmassenverteilung polymodale Systeme. Mischungen aus verschiedenen Polymeren können als multimodale Systeme, wobei jedes Polymer eine eigene Molmassenverteilung einbringt, aufgefasst werden. Mischungen von Blockcopolymeren mit Strukturen unterschiedlicher Molmassenverteilung können ebenfalls als multimodale Systeme aufgefasst werden. Jedes Blockcopolymer bringt dann eine eigene Molmassenverteilung ein. Der Einfachheit werden diese hier Blockcopolymermode genannt.

GPC (Gelpermeationschomatographie) bietet sich als messtechnisches Verfahren zur Bestimmung der Molmasse einzelner Polymermoden in Gemischen verschiedener Polymere an. Für die im Sinne dieser Erfindung einsetzbaren durch lebende, anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MM) von Elastomeren werden mittels GPC bestimmt. Als Eluent wird THF eingesetzt. Die Messung erfolgt bei 23 °C. Als Vorsäule wird PSS-SDV, 5 µ, 10³ Ä, ID 8,0 mm x 50 mm verwendet. Zur Auftrennung werden die Säulen PSS-SDV, 5 µ, 10³ Ä sowie 10⁴ Ä und 10⁶ Ä mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. (µ = µm; 1 Ä = 10⁻¹⁰ m).

### (b) gewichtsmittlere Molmasse

Das gewichtsmittlere Molekulargewicht M_{w} von Klebharzen, Weichmachern und Verstärkern wird mittels GPC bestimmt. Als Eluent wird THF eingesetzt. Die Messung erfolgt bei 23 °C. Als Vorsäule wird PSS-SDV, 5 µ, 10³ Ä, ID 8,0 mm x 50 mm verwendet. Zur Auftrennung werden die Säulen PSS-SDV, 5 µ, 10³ Ä sowie 10⁴ Ä und 10⁶ Ä mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II - DSC

Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg. Auch die Schmelztemperatur bzw. Erweichungstemperatur von Polymeren bzw. Polymerblöcken wird auf diese Weise ermittelt.

### Test IIIa - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test IIIb - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Test IV - (Klebharz)Erweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test V - Schmelzviskosität

Zur Bestimmung der Schmelzviskosität der Weichharze wird ein Schubspannungssweep in einem schubspannungsgeregelten DSR 200 N Rheometer der Firma Rheometrics Scientific in Rotation durchgeführt. Es kommt ein Kegel/Platte-Messsystem mit einem Durchmesser von 25 mm (Kegelwinkel 0,1002 rad) zur Anwendung, der Messkopf ist luftgelagert und geeignet für Normalkraftmessungen. Der Spalt beträgt 0,053 mm und die Messtemperatur 25 °C. Die Frequenz wird von 0,002 Hz bis 200 Hz variiert und die Schmelzviskosität bei 1 Hz registriert.

### Test VI - Klebkraft Stahl

Die Bestimmung der Klebkraft wird wie folgt durchgeführt. Als definierter Haftgrund wird eine polierte Stahlplatte (ASTM D3330; dreimal mit Aceton mit einem Zellstofftuch gesäubert und 10 min abgedampft) mit einer Stärke von 2 mm eingesetzt. Das zu untersuchende verklebbare Flächenelement (30 g/m² Haftklebeschicht auf 85 µm MOPP-Folie) wird, falls nicht anderweitig angegeben, auf eine Breite von 20 mm und eine Länge von etwa 25 cm zugeschnitten, mit einem Handhabungsabschnitt versehen und unmittelbar danach fünfmal hin und her mit einer Stahlrolle von 4 kg bei einem Vorschub von 10 m/min auf den Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus zwei Einzelmessungen.

### Test VII - SAFT

Dieser Test dient der Schnellprüfung der Scherfestigkeit von Klebeformulierungen unter Temperaturbelastung. Dafür wird ein zu untersuchendes Prüfmuster auf eine temperierbare Stahlplatte geklebt, mit einem Gewicht (50 g) belastet und die Scherstrecke aufgezeichnet.

### Messprobenpräparation:

Das zu untersuchende Prüfmuster (30 g/m² auf 85 µm MOPP-Träger) wird auf eine Größe von 10 mm * 50 mm geschnitten.

Die zugeschnittene Klebebandprobe wird mit der anderen Klebemassenseite auf eine polierte, mit Aceton gereinigte Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Platte derart aufgehängt, dass das länger überstehende Ende des Prüfmusters senkrecht nach unten zeigt.

### Messung:

Die zu messende Probe wird am unteren Ende mit einem Gewicht von 50 g belastet. Die Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei Überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

### Test VIII - Wiederablösbarkeit

Ein Teststreifen (Breite 20 mm) wird mit einer Länge von 250 mm zugeschnitten und wird auf eine Stahl-Platte (nach ASTM D3330; dreimal mit Aceton mit einem Zellstofftuch gesäubert und 10 min abgedampft) mit einer Stärke von 2 mm mit einer Gummirolle laminiert und mit einer 2 kg Stahlrolle einmal hin und her angerollt. Der Verbund wird bei 60 °C und 95 % rel. Luftfeuchtigkeit für 7 d gelagert. Anschließend wird für 24 h bei 23 °C und 50 % rel. Luftfeuchtigkeit äquilibriert und mit 10 m/min unter einem Winkel von etwa 170 ° abgezogen. Das Substrat wird im Anschluss optisch auf etwaige Klebebandrückstände begutachtet.

Es wird eine Doppelbestimmung durchgeführt und folgende Bewertungsskala angelegt:

| | | |
|---|---|---|
| ++ | ≤ 1 Flächen-% Klebmasserückstände, kein Trägerspalten | Sehr gut bestanden |
| + | ≤ 5 Flächen-% Klebmasserückstände, kein Trägerspalten | Gut bestanden |
| - | > 5 Flächen-% Klebmasserückstände, kein Trägerspalten | Nicht bestanden |
| -- | Trägerspalten | Nicht bestanden |

## Patentansprüche

1. Selbstklebeband umfassend einen Träger aus einer monoaxial gereckten Polypropylen-Folie und eine Haftklebemasse, die umfasst:
a) 38 bis 65 Gew.-% einer Elastomerkomponente;
b) 8 bis 45 Gew.-% einer Klebharzkomponente; und
c) 2 bis 22 Gew.-% einer Verstärkungskomponente
jeweils bezogen auf das Gesamtgewicht der Haftklebemasse, **dadurch gekennzeichnet, dass** die Summe der Anteile an Elastomerkomponente und Verstärkungskomponenten in der Haftklebemasse mindestens 52 Gew.-% beträgt, bezogen auf das Gesamtgewicht der Haftklebemasse, und wobei die Verstärkungskomponente wenigstens ein Harz ist, welches ein gewichtsmittleres Molekulargewicht M_{w} von mindestens 800 g/mol aufweist.

2. Selbstklebeband gemäß Anspruch 1, **dadurch gekennzeichnet, dass** die Dicke der Trägerfolie nach dem Recken 20 bis 150 µm, vorzugsweise 25 bis 100 µm beträgt.

3. Selbstklebeband gemäß wenigstens einem der vorangehenden Ansprüche, **dadurch gekennzeichnet, dass** es sich bei der Elastomerkomponente um ein Polydien-Blockcopolymer, insbesondere ein Polyvinylaromat-Polydien-Blockcopolymer, handelt.

4. Selbstklebeband gemäß wenigstens einem der vorangehenden Ansprüche, **dadurch gekennzeichnet, dass** die Klebharzkomponente ausgewählt ist aus der Gruppe bestehend aus unpolaren Kohlenwasserstoffharzen, vorzugsweise hydrierten und nicht hydrierten Polymerisaten des Dicyclopentadiens; nicht hydrierten, partiell, selektiv oder vollständig hydrierten Kohlenwasserstoffharzen auf Basis von C5-, C5/C9- oder partiell, selektiv oder vollständig hydrierten Kohlenwasserstoffharzen auf Basis von C9-Monomerströmen, und Polyterpenharze auf Basis von α-Pinen und/oder β-Pinen und/oder δ-Limonen.

5. Selbstklebeband gemäß wenigstens einem der vorangehenden Ansprüche, **dadurch gekennzeichnet, dass** der Anteil der Klebharzkomponente an der Haftklebemasse maximal 40 Gew.-%, besonders bevorzugt maximal 35 Gew.-%, jeweils bezogen auf das Gesamtgewicht der Haftklebemasse.

6. Selbstklebeband gemäß wenigstens einem der vorangehenden Ansprüche, **dadurch gekennzeichnet, dass** die Verstärkungskomponente wenigstens ein Harz basierend auf wenigstens einer, insbesondere aromatischen, Kohlenwasserstoffverbindung, vorzugsweise erhalten aus C8- und/oder C9-Strömen und die bevorzugt ausgewählt ist aus der Gruppe bestehend aus Styrol, alpha-Methylstyrol, para-Methylstyrol, Inden, Methylinden und Copolymeren daraus, wobei das wenigstens eine Harz der Verstärkungskomponente vorzugsweise ein gewichtsmittleres Molekulargewicht M_{w} von 1.000 g/mol bis 15.000 g/mol, bevorzugt 2.000 g/mol bis 10.000 g/mol aufweist, bestimmt mittels GPC.

7. Selbstklebeband gemäß wenigstens einem der vorangehenden Ansprüche, **dadurch gekennzeichnet, dass** die Verstärkungskomponente in einer Menge von 8 bis 18 Gew.-% in der Haftklebemasse enthalten ist, jeweils bezogen auf das Gesamtgewicht der Haftklebemasse.

8. Selbstklebeband gemäß wenigstens einem der vorangehenden Ansprüche, **dadurch gekennzeichnet, dass** das wenigstens eine Harz der Verstärkungskomponente einen Erweichungspunkt von mindestens 130 °C, vorzugsweise mindestens 140 °C, aufweist, bestimmt gemäß ASTM E28.

9. Selbstklebeband gemäß wenigstens einem der vorangehenden Ansprüche, **dadurch gekennzeichnet, dass** die Summe der Anteile an Elastomerkomponente und Verstärkungskomponente in der Haftklebemasse mindestens 55 Gew.-%, vorzugsweise mindestens 60 Gew.-% beträgt, bezogen auf das Gesamtgewicht der Haftklebemasse.

10. Selbstklebeband gemäß wenigstens einem der vorangehenden Ansprüche, **dadurch gekennzeichnet, dass** die Haftklebemasse weiterhin eine Weichmacherkomponente aufweist, vorzugsweise in einer Menge von 3 bis 25 Gew.-%, vorzugsweise 8 bis 18 Gew.-%, bezogen auf das Gesamtgewicht der Haftklebemasse.

11. Selbstklebeband gemäß wenigstens einem der vorangehenden Ansprüche, **dadurch gekennzeichnet, dass** der Anteil an Mineralöl und/oder Mineralölgemischen in der Haftklebemasse nicht mehr als 3 Gew.-%, vorzugsweise nicht mehr als 1,5 Gew.-% beträgt, bezogen auf das Gesamtgewicht der Haftklebemasse.

12. Selbstklebeband gemäß wenigstens einem der vorangehenden Ansprüche, **dadurch gekennzeichnet, dass** die Haftklebemasse weitere Additive enthält, vorzugsweise in einer Menge von nicht mehr als 18 Gew.-%, besonders bevorzugt nicht mehr als 10 Gew.-%, bezogen auf das Gesamtgewicht der Haftklebemasse.

13. Selbstklebeband gemäß wenigstens einem der vorangehenden Ansprüche, **dadurch gekennzeichnet, dass** die Haftklebemasse durch lösemittelfreies Mischen hergestellt wird.

14. Verfahren zur Herstellung eines Selbstklebebands gemäß wenigstens einem der vorangehenden Ansprüche, **dadurch gekennzeichnet, dass** die Haftklebemasse lösemittelfrei mittels Extrusion oder Kontaktdüsenbeschichtung auf den Träger aufgebracht wird.

15. Verwendung eines Selbstklebebands gemäß wenigstens einem der Ansprüche 1 bis 13 als Fixierungsklebeband, zur Transportsicherung, zum Bündeln, Verpacken, Palettisieren und/oder zur Kantenverstärkung.
